# EUROPÄISCHE PATENTSCHRIFT

(11) **EP 0 968 216 B1**
(45) Veröffentlichungstag und Bekanntmachung des Hinweises auf die Patenterteilung: **16.10.2002**
(21) Anmeldenummer: 98905389.7
(22) Anmeldetag: 03.02.1998
(51) Int. Cl.: C07F 9/02

(54) **PHOSPHIN-LIGANDEN MIT AMINOSÄUREGRUPPEN, EIN VERFAHREN ZU IHRER HERSTELLUNG SOWIE IHRE VERWENDUNG ALS KATALYSATORBESTANDTEILE**
PHOSPHINE LIGANDS WITH AMINO ACID GROUPS, METHOD FOR THEIR PRODUCTION AND USE THEREOF AS CATALYST COMPONENTS
LIGANDS PHOSPHINE A GROUPES AMINOACIDES, LEUR PROCEDE DE FABRICATION ET LEUR UTILISATION COMME CONSTITUANTS DE CATALYSEURS

(30) Priorität: 07.02.1997 DE 19704491
(43) Veröffentlichungstag der Anmeldung: 05.01.2000
(73) Patentinhaber: Celanese Chemicals Europe GmbH, 60439 Frankfurt am Main (DE)
(72) Erfinder: STELZER, Othmar, D-42349 Wuppertal (DE); TEPPER, Michael, D-42105 Wuppertal (DE)
(86) Internationale Anmeldenummer: EP9800555
(87) Internationale Veröffentlichungsnummer: WO98034939

(56) Entgegenhaltungen:
- Tetrahedron Letters, Band 38, Nr. 13, März 1997, Michael Tepper et al, "A Systematic Synthetic Approach to Phosphinophenyl-glycine and-alanine Chiral Phosphine Ligands with Amino Acid Moieties"
- J. Org. Chem., Band 61, 1996, Scott R. Gilbertson et al, "Palladium-Catalyzed Synthesis of Phosphine-Containing Amino Acids", Seite 2922 - Seite 2923, XP002900184

## Beschreibung

Die vorliegende Erfindung betrifft neue chirale Phosphin-Liganden mit Aminosäuregruppen, ein Verfahren zu ihrer Herstellung sowie ihre Verwendung als Katalysatorbestandteile.

Phosphine haben generell eine vielseitige technische Anwendung gefunden. Sie eignen sich beispielsweise als Antioxidantien, Metallextraktionsmittel, Flammschutzimprägniermittel, Stabilisierungsmittel für Olefine und Trioxan, als Ausgangsverbindungen für Wittig-Reagenzien und als Liganden für Metallkomplexkatalysatoren. Aufgrund ihrer Formenvielfalt stellen sie auch Vorprodukte zur Herstellung weiterer, gegebenenfalls Phosphor enthaltender organischer Verbindungen dar.

Da die Phosphine in ihrem Molekül ein trivalentes Phosphoratom enthalten, besitzen sie gegenüber zahlreichen Metallen und Metallionen, insbesondere solchen aus der Reihe der Übergangsmetalle, komplexierende Eigenschaften, was zur Herstellung entsprechender Metallkomplexkatalysatoren, die in technischen Prozessen Anwendung finden, genutzt werden kann.

Von Bedeutung ist vor allem die Entwicklung von Liganden für Katalysatorsysteme, die z.B. bei der Hydroformylierung von Olefinen eingesetzt werden. Hierbei haben sich vor allem Katalysatorsysteme bewährt, die tertiäre Phosphine oder Phosphite als Liganden enthalten.

Von Interesse im Bereich der Phosphine sind auch solche, die zur Herstellung chiraler Metallkomplexverbindungen geeignet sind. Bekannt ist hier beispielsweise ein Diphosphin, das S,S-2,4-Bis [bis-(p-N,N-dimethylaminophenyl)phosphino]pentan (Catalysis Letters 5 (1990) 183-188) sowie N,N-Dimethyl-[2-(diphenylphosphino)phenyl]-1(R)-ethylamin (Can. J. Chem. 64, (1986), 1930-1935). Die Pt- und Rh-Komplexe des 2S, 4S-(N-tert.butoxycarbonyl)-4-diphenylphosphino-2-[(di-tert.butylphosphino)methyl]-pyrrolidins und der entsprechenden Dibenzophospholylderivate sind aktive Katalysatoren für die enantioselektive Hydroformylierung von Vinylaromaten und die enantioselektive Hydrierung prochiraler Olefine (Organometallics, 10 (1991), 1183-1189; J.Org.Chem. 45 (1990), 4728-4739). Rh(I)-Komplexe amphiphiler zweizähniger Phosphane wie z.B. des 2,2'-Bis [phenyl (3-pyridyl)phosphinomethyl]-1,1'biphenyls wurden für die Hydroformylierung von 1-Octen eingesetzt. Aufgrund ihres amphiphilen Charakters lassen sich diese Liganden durch saure Extraktion aus den Reaktionsgemischen zurückgewinnen (J.Chem.Soc., Dalton Trans. (1996), 2143-2154). Thiophosphorylproline, -phenylglycine und -phenylalanine wurden als Bausteine für die Synthese phosphanylsubstituierter Peptide eingesetzt. Ihre Rh(I)-Komplexe sind als neuartige biokonjugierte und immobilisierte Katalysatoren von Interesse (Angew.Chem., 108 (1996), 963-966; J.Org.Chem. 61, (1996), 2922-2923).

Aus J.Org.Chem. 1996, 61, 2922-2933 ist ein Verfahren zur Herstellung phosphinhaltiger Aminosäuren bekannt. Ausgehend von N-geschützten Aminosäuren wird zunächst eine an einem aromatischen Ring gebundene OH-Gruppe durch eine Triflat-Gruppe ersetzt. Die anschließende Reaktion mit Diphenylphosphin in Gegenwart von Palladiumacetat führt zur Substitution der Triflatgruppe durch die Diphenylphosphino-Gruppe. Im weiteren Verlauf der Offenbarung wird die Phosphino-Gruppe durch Reaktion mit Schwefel in die Sulfidgruppe überführt.

In Anbetracht der besonderen Bedeutung, die chiralen Phosphinen zukommt, ist es von Interesse, neue Verbindungen aus dieser Gruppe bereitzustellen, um das Spektrum ihrer Anwendungsmöglichkeiten nicht nur zu ergänzen, sondern auch durch eine Variation stofflicher Eigenschaften und struktureller Merkmale zu bereichern und zu erweitern.

Diese Aufgabe wird gelöst durch Verbindungen der allgemeinen Formel I 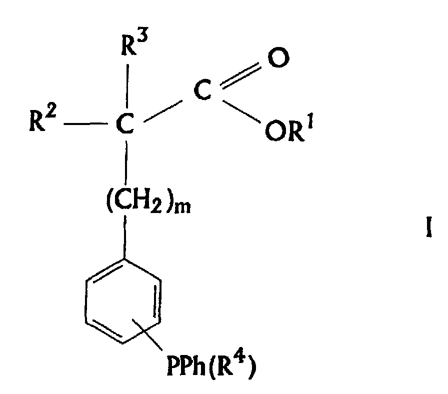 wobei
- R¹: Wasserstoff, ein C₁ - C₇-Alkylrest, ein C₆-C₁₀-Arylrest oder ein einwertiges Metall, bevorzugt Natrium oder Kalium, ist
- R²: Wasserstoff oder einen C₁ - C₇-Alkylrest darstellt,
- R³: Wasserstoff oder einen Rest -NR⁵R⁶ bedeutet, worin R⁵ und R⁶ verschieden sind und Wasserstoff oder C₁ - C₇-Alkyl- oder C₆-C₁₀-Arylreste sind, oder worin R⁵ und R⁶ gleich sind und C₁-C₇-Alkyl- oder C₆-C₁₀-Arylreste sind,
- R⁴: ein C₁ - C₇-Alkyl- oder C₆-C₁₀-Arylreste sind und
- m: 0 oder 1 ist.

Gegenstand der Erfindung ist ferner ein Verfahren zur Herstellung der Verbindungen der allgemeinen Formel I 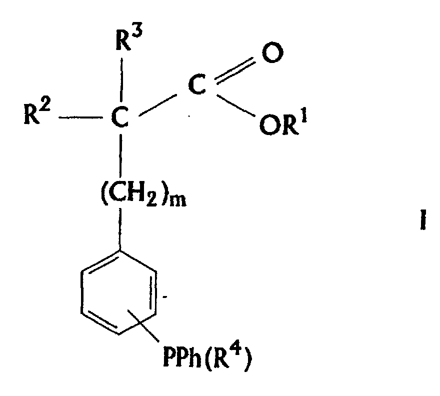 wobei
- R¹: Wasserstoff, ein C₁ - C₇-Alkylrest, ein C₆-C₁₀-Arylrest oder ein einwertiges Metall, bevorzugt Natrium oder Kalium, ist
- R²: Wasserstoff oder einen C₁ - C₇-Alkylrest darstellt,
- R³: Wasserstoff oder einen Rest -NR⁵R⁶ bedeutet, worin R⁵ und R⁶ gleich oder verschieden sind und Wasserstoff oder C₁ - C₇-Alkyl- oder C₆-C₁₀-Arylreste sind,
- R⁴: ein C₁ - C₇-Alkyl- oder C₆-C₁₀-Arylreste sind und
- m: 0 oder 1 ist
durch Umsetzung von Fluorphenyl substituierten Verbindungen der allgemeinen Formel II 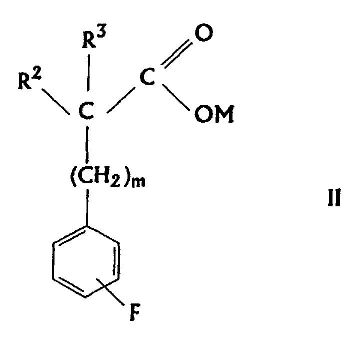 wobei
- R²: Wasserstoff oder einen C₁ - C₇-Alkylrest bedeutet
- R³: Wasserstoff oder den Rest -NR⁵R⁶ darstellt, worin R⁵ und R⁶ gleich oder verschieden und Wasserstoff oder C₁ - C₇-Alkyl- oder Arylreste sind,
- m: 0 oder 1 ist und
- M: Natrium oder Kalium ist
mit einem Phosphid der allgemeinen Formel III

Ph(R⁴)P M III

wobei
- R⁴: einen C₁ - C₇-Alkyl- oder C₆-C₁₀-Arylrest, insbesondere Phenylrest bedeutet und
- M: Natrium oder Kalium ist
und anschließende saure Hydrolyse des Reaktionsgemischs.

Die Reaktion wird üblicherweise in einem organischen polar aprotischen Lösungsmittel wie 1,2-Dimethoxyethan oder Tetrahydrofuran bei einer Temperatur von 80 - 120°C durchgeführt.

Bevorzugt werden als Verbindungen der Formel II Natrium- oder Kaliumsalze von 4-Fluor-α-phenylglycin (lla), 4-Fluor-α-phenyl-α-methylglycin (IIb) und β-(4-Fluorphenyl)-α-alanin (IIc) mit den Kaliumphosphiden Ph(R⁴)PK als Verbindungen der Formel III, wobei R⁴ ein C₁ - C₇-Alkyl- oder Phenylrest ist, umgesetzt.

Nach dem erfindungsgemäßen Verfahren lassen sich bevorzugt Phosphinophenyl substituierte Aminosäuren der Formel IV auf der Basis von Phenylglycin 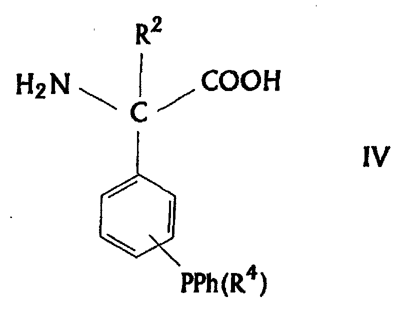 herstellen, wobei R² Wasserstoff oder Methyl und R⁴ einen C₁ - C₇-Alkyl- oder Phenylrest darstellt und sich der Phosphinophenylrest -PPh(R⁴) in ortho- oder para-Stellung zum Aminosäuresubstituenten -C(NH₂)(R²)(COOH) befindet.

Ferner lassen sich nach dem erfindungsgemäßen Verfahren Phosphinophenyl substituierte Aminosäuren der Formel V auf der Basis von Phenylalanin 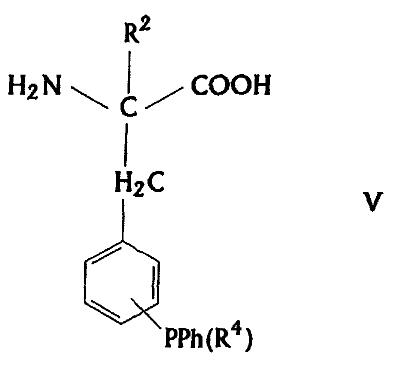 bevorzugt herstellen, wobei R² Wasserstoff oder einen C₁-C₇-Alkylrest, inbesondere Methyl, und R⁴ einen C₁ - C₇-Alkyl- oder Phenylrest darstellt und sich der Phosphinophenylrest -PPh(R⁴) in ortho- oder para-Stellung zum Aminosäuresubstituenten -CH₂-C(NH₂)(R²)(COOH) befindet.

Während die Natrium- und Kaliumsalze von 4-Fluor-α-phenylglycin (IIa) und β-(4-Fluorphenyl)-α-alanin (IIc) kommerziell erhältliche Substanzen darstellen, können die Natrium- oder Kaliumsalze von 4-Fluor-α-phenyl-α-methylglycin (IIb) über eine Bucherer-Reaktion hergestellt werden durch Umsetzung von 4-Fluoracetophenon mit Kaliumcyanid und Ammoniumcarbonat unter Bildung eines Hydantoins der Formel VI als Zwischenprodukt, 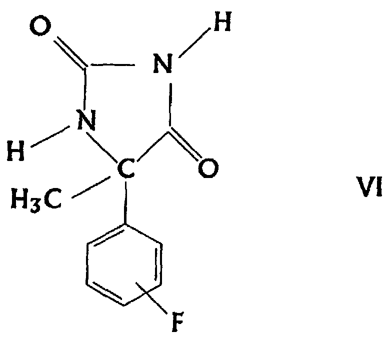 welches mit wäßriger Natronlauge hydrolysiert wird.

Die erfindungsgemäßen Verbindungen der Formel I eignen sich als Liganden für Metall-Komplexe, die als Katalysatoren für Reaktionen zum Aufbau von C-C, C-H, C-N, C-Si oder C=O-Bindungen verwendet werden können.

### Beispiel 1:

### Herstellung von 2-Diphenylphosphino-α-phenylglycin.

Eine Lösung von 3,07 g (16,5 mmol) Diphenylphosphin in 60 ml 1,2-Dimethoxyethan wurde mit 0,64 g (16,5 mmol) Kalium versetzt. Nach Beendigung der Metallierungsreaktion wurden 3,0 g (15,7 mmol) Natrium-2-(2-fluorphenyl)glycinat hinzugefügt und die Reaktionsmischung für 3 h auf 80°C erhitzt. Anschließend wurden 10 ml Methanol hinzugefügt und die flüchtigen Bestandteile bei einem Druck von 10⁻² bar bei 80°C entfernt. Der erhaltene Rückstand wurde in 500 ml verdünnter wäßriger Salzsäure (pH = 4) suspendiert und filtriert sowie bei 10⁻² bar und 20°C getrocknet. Die Ausbeute betrug 4,7 g (89 %). Zur weiteren Aufarbeitung wurde das Produkt aus einer 3 : 1 Wasser/Methanol-Mischung umkristallisiert. Die ¹H, ¹³C{¹H}- und ³¹P{¹H}-NMR Spektren wurden auf einem Bruker AC 250-Spektrometer aufgenommen, die Massenspektren wurden auf einem Varian MAT 311 A angefertigt.

| Elementaranalyse C₂₀H₁₈NO₂P • 2H₂O (371.49) | | | | | | |
|---|---|---|---|---|---|---|
| Berechnet | C | 64.68 | H | 5.97 | N | 3.77 |
| Gefunden | C | 64.74 | H | 5.95 | N | 3.84 |

³¹P {¹H} ^{·}NMR δ P = -9.6 ppm
¹³C{¹H} NMR: (δ in ppm) : 137.8 (9.7), 137.4 (8.9), 134.9 (19.2), 134.6 (18.8), 129.7 (6.8), 129.6 (6.7), 130.0, 129.8, 138.4 (13.7), 142.2 (27.2), 130.1, 131.2, 128.6 (4.7), 136.1 (1.3), 57.6 (27.7, CH), 179.8 (COOH)
MS: 335 (M⁺), 291 (M⁺ - CO₂)

### Beispiel 2

### Herstellung von 2-(Methyl-phenyl)phosphino-α-phenylglycin

Eine Lösung von 2,11 g (17,0 mmol) Methyl-phenylphosphin in 20 ml 1,2-Dimethoxyethan wurde mit 0,67 g (17,0 mmol) Kaliummetall versetzt. Nach Beendigung der Metallierungsreaktion wurden 3,0 g (15,7 mmol) Natrium-2-(2-fluorphenyl)-glycinat zugesetzt und das Reaktionsgemisch 0,5 h auf 80°C erhitzt. Anschließend wurde überschüssiges Kalium-phenylmethylphosphid durch Zugabe von 10 ml Methanol hydrolysiert und die flüchtigen Anteile aus dem Reaktionsgemisch im Vakuum (80°C, 0,01 mbar) abgezogen. Der Rückstand wurde mit 50 ml Ether extrahiert, in 500 ml Wasser gelöst und durch Zugabe von 10 %iger Salzsäure auf einen pH-Wert von ca. 4 eingestellt. Das dabei als farbloser Niederschlag erhaltene 2-(Methyl-phenyl)phosphino-α-phenylglycin wurde abfiltriert und im Vakuum getrocknet. Die Ausbeute betrug 3,46 g (81 %). Zur weiteren Reinigung wurde aus Methanol/Wasser (1:1) umkristallisiert.

| Elementaranalyse C₁₅H₁₆NO₂P • H₂O (291.3) | | | | | | |
|---|---|---|---|---|---|---|
| Berechnet | C | 61.85 | H | 6.23 | N | 4.81 |
| Gefunden | C | 62.43 | H | 6.55 | N | 4.75 |

³¹P{¹H}-NMR δP = -31.3, -32.3 ppm
¹³C{¹H}-NMR δC(CH(NH₂)(COOH)) = 59.8 (24.1), 59.1 (26.2); δC(COOH) = 180.3, 179.9
ppm (Kopplungskonstanten ⁿJ(PC) in Hz in Klammern)
Ms: 229 (M⁺ - CO₂), 214 (M' - CO₂-CH₃)

## Patentansprüche

1. Verbindungen der allgemeinen Formel I 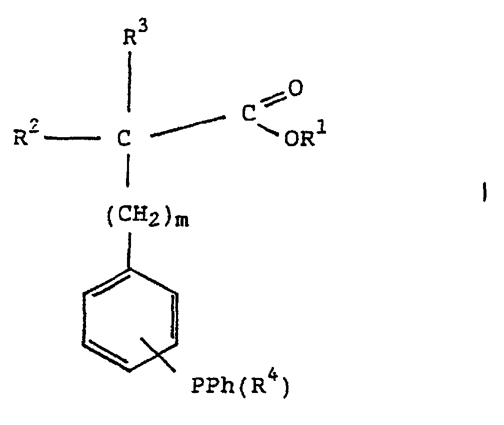 wobei
R¹ Wasserstoff, ein C₁ - C₇-Alkylrest, ein C₆ - C₁₀-Arylrest oder ein einwertiges Metall, bevorzugt Natrium oder Kalium, ist.
R² Wasserstoff oder einen C₁ - C₇-Alkylrest darstellt,
R³ Wasserstoff oder einen Rest -NR⁵R⁶ bedeutet, worin R⁵ und R⁶ verschieden sind und Wasserstoff oder C₁ - C₇-Alkyl- oder C₆-C₁₀-Arylreste sind, oder worin R⁵ und R⁶ gleich sind und C₁ - C₇-Alkyl- oder C₆ - C₁₀-Arylreste sind,
R⁴ ein C₁ - C₇-Alkyl- oder C₆ - C₁₀-Arylreste sind und
m 0 oder 1 ist.

2. Verfahren zur Herstellung der Verbindungen der allgemeinen Formel I 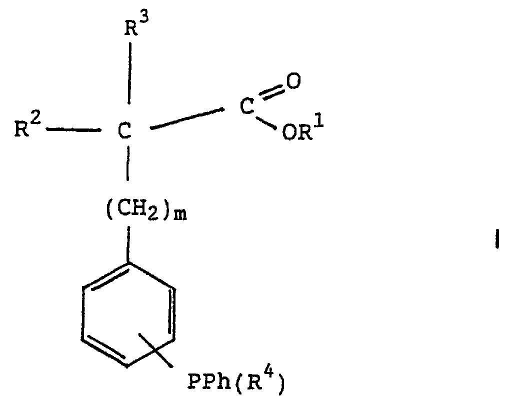 wobei
R¹ Wasserstoff, ein C₁ - C₇-Alkylrest, ein C₆ - C₁₀-Arylrest oder ein einwertiges Metall, bevorzugt Natrium oder Kalium, ist.
R² Wasserstoff oder einen C₁ - C₇-Alkylrest darstellt,
R³ Wasserstoff oder einen Rest -NR⁵R⁶ bedeutet, worin R⁵ und R⁶ gleich oder verschieden sind und Wasserstoff oder C₁ - C₇-Alkyl- oder C₆ - C₁₀-Arylreste sind,
R⁴ ein C₁ - C₇-Alkyl- oder C₆ - C₁₀-Arylreste sind und
m 0 oder 1 ist
durch Umsetzung von Fluorphenyl substituierten Verbindungen der allgemeinen Formel II 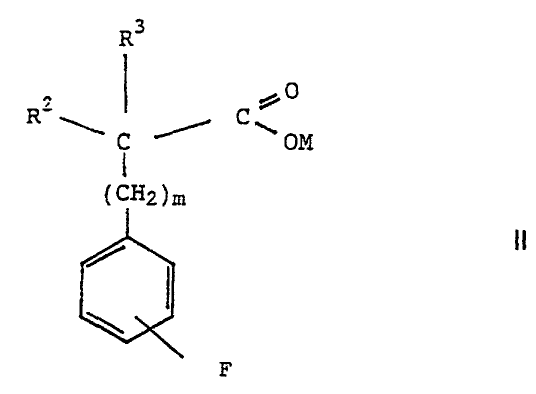 wobei
R² Wasserstoff oder einen C₁ - C₇-Alkylrest bedeutet
R³ Wasserstoff oder den Rest -NR⁵R⁶ darstellt, worin R⁵ und R⁶ gleich oder verschieden und Wasserstoff oder C₁ - C₇-Alkyl- oder Arylreste sind,
m 0 oder 1 ist und
M Natrium oder Kalium ist
mit einem Phosphid der allgemeinen Formel III
Ph(R⁴)P M III
wobei
R⁴ einen C₁ - C₇-Alkyl- oder C₆ - C₁₀-Arylrest, insbesondere Phenylrest, bedeutet und
M Natrium oder Kalium ist
und anschließende saure Hydrolyse des Reaktionsgemischs.

3. Verfahren nach Anspruch 2, **dadurch gekennzeichnet, daß** man die Umsetzung in einem organischen polar aprotischen Lösungsmittel, bevorzugt 1,2-Dimethoxyethan oder Tetrahydrofuran, bei einer Temperatur von 80 - 120°C durchführt.

4. Verfahren nach Anspruch 2 oder 3, **dadurch gekennzeichnet, daß** man als Verbindungen der Formel II Natrium- oder Kaliumsalze von 4-Fluor-α-phenylglycin (lla), 4-Fluor-α-phenyl-α-methylglycin (IIb) oder β-(4-Fluorphenyl)-α-alanin (IIc) mit den Kaliumphosphiden Ph(R⁴)PK als Verbindungen der Formel III, wobei R⁴ ein C₁ - C₇-Alkyl- oder Phenylrest ist, umsetzt.

5. Verfahren zur Herstellung von Phosphinophenyl substituierten Aminosäuren der Formel IV auf der Basis von Phenylglycin gemäß Anspruch 2 oder 3, 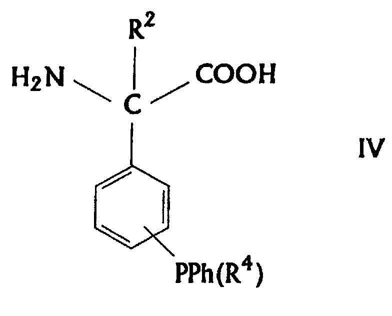 wobei R² Wasserstoff oder Methyl und R⁴ einen C₁ - C₇-Alkyl- oder Phenylrest darstellt und sich der Phosphinophenylrest -PPh(R⁴) in ortho- oder para-Stellung zum Aminosäuresubstituenten -C(NH₂)(R²)(COOH) befindet.

6. Verfahren zur Herstellung von Phosphinophenyl substituierten Aminosäuren der Formel V auf Basis von Phenylalanin gemäß Anspruch 2 oder 3, 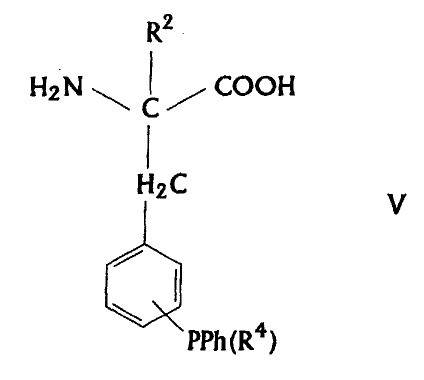 wobei R² Wasserstoff oder einen C₁ - C₇-Alkylrest, insbesondere Methyl, und R⁴ einen C₁ - C₇-Alkyl- oder Phenylrest darstellt und sich der Phosphinophenylrest -PPh(R⁴) in ortho- oder para-Stellung zum Aminosäuresubstituenten -CH₂-C(NH₂)(R²)(COOH) befindet.

7. Verwendung der Verbindungen nach Anspruch 1 als Katalysatorbestandteile für Reaktionen zum Aufbau von C-C, C-H, C-N, C-Si oder C=O-Bindungen.

## Claims

1. A compound of the formula I 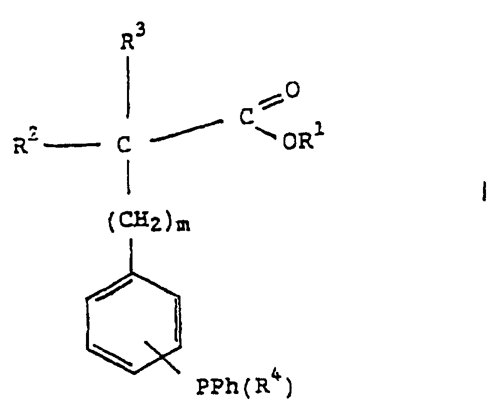 where
R¹ is hydrogen, a C₁-C₇-alkyl radical, a C₆-C₁₀-aryl radical or a monovalent metal, preferably sodium or potassium,
R² is hydrogen or a C₁-C₇-alkyl radical,
R³ is hydrogen or an -NR⁵R⁶ radical, where R⁵ and R⁶ are different and are hydrogen or C₁-C₇-alkyl or C₆-C₁₀-aryl radicals, or where R⁵ and R⁶ are identical and are C₁-C₇-alkyl or C₆-C₁₀-aryl radicals,
R⁴ is a C₁-C₇-alkyl or C₆-C₁₀-aryl radical and
m is 0 or 1.

2. A process for preparing compounds of the formula I 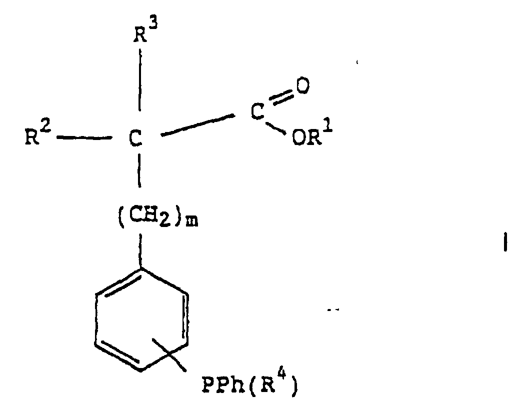 where
R¹ is hydrogen, a C₁-C₇-alkyl radical, a C₆-C₁₀-aryl radical or a monovalent metal, preferably sodium or potassium,
R² is hydrogen or a C₁-C₇-alkyl radical,
R³ is hydrogen or an -NR⁵R⁶ radical, where R⁵ and R⁶ are identical or different and are hydrogen or C₁-C₇-alkyl or C₆-C₁₀-aryl radicals,
R⁴ is a C₁-C₇-alkyl or C₆-C₁₀-aryl radical and
m is 0 or 1
by reaction of fluorophenyl-substituted compounds of the formula II 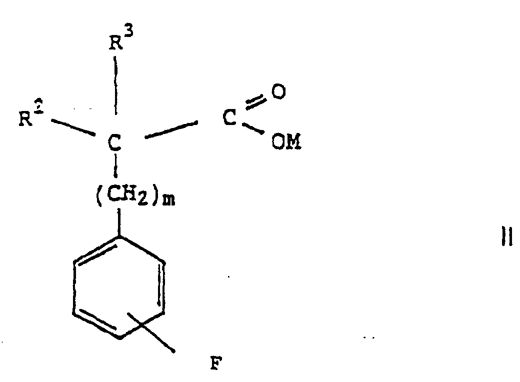 where
R² is hydrogen or a C₁-C₇-alkyl radical,
R³ is hydrogen or an -NR⁵R⁶ radical, where R⁵ and R⁶ are identical or different and are hydrogen or C₁-C₇-alkyl or aryl radicals,
m is 0 or 1 and
M is sodium or potassium,
with a phosphide of the formula III
Ph(R⁴)P M III
where
R⁴ is a C₁-C₇-alkyl or C₆-C₁₀-aryl radical, in particular a phenyl radical, and
M is sodium or potassium,
and subsequent acid hydrolysis of the reaction mixture.

3. The process as claimed in claim 2, wherein the reaction is carried out in an organic polar aprotic solvent, preferably 1,2-dimethoxyethane or tetrahydrofuran, at a temperature of 80-120°C.

4. The process as claimed in claim 2 or 3, wherein sodium or potassium salts of 4-fluoro-α-phenylglycine (IIa), 4-fluoro-α-phenyl-α-methylglycine (IIb) or β-(4-fluorophenyl)-a-alanine (IIc) as compounds of the formula II are reacted with the potassium phosphides Ph(R⁴)PK as compounds of the formula III, where R⁴ is a C₁-C₇-alkyl or phenyl radical.

5. The process as claimed in claim 2 or 3 for preparing of a phosphinophenyl-substituted amino acid of the formula IV based on phenylglycine 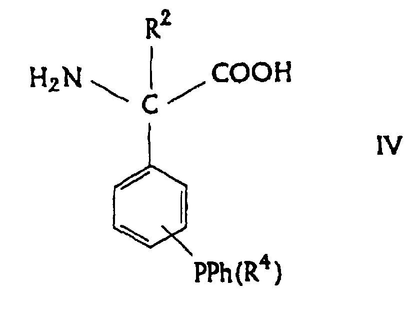 where R² is hydrogen or methyl and R⁴ is a C₁-C₇-alkyl or phenyl radical and the phosphinophenyl radical -PPh(R⁴) is located in the ortho or para position relative to the amino acid substituent -C(NH₂)(R²)(COOH).

6. The process as claimed in claim 2 or 3 for preparing of a phosphinophenyl-substituted amino acid of the formula V based on phenylalanine 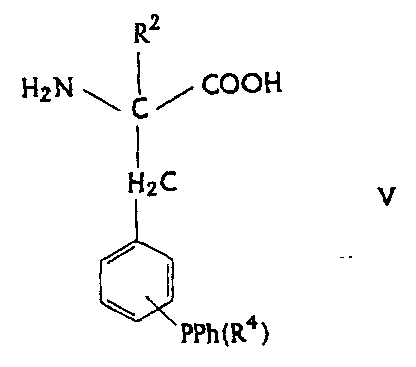 where R² is hydrogen or a C₁-C₇-alkyl radical, in particular methyl, and R⁴ is a C₁-C₇-alkyl or phenyl radical and the phosphinophenyl radical -PPh(R⁴) is located in the ortho or para position relative to the amino acid substituent -CH₂-C(NH₂)(R²)(COOH).

7. The use of compounds as claimed in claim 1 as catalyst constituents for reactions to form C-C, C-H, C-N, C-Si or C=O bonds.

## Revendications

1. Composés de formule générale I 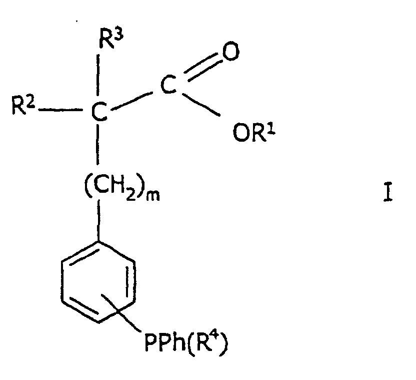 où
R¹ est l'hydrogène, un reste alkyle en C₁-C₇, un reste aryle en C₆-C₁₀ ou un métal monovalent, de préférence le sodium ou le potassium,
R² représente l'hydrogène ou un reste alkyle en C₁-C₇,
R³ représente l'hydrogène ou un reste -NR⁵R⁶ où R⁵ et R⁶ sont différents et sont l'hydrogène ou des restes alkyles en C₁-C₇ ou aryles en C₆-C₁₀, où bien où R⁵ et R⁶ sont identiques et sont des restes alkyles en C₁-C₇ ou aryles en C₆-C₁₀,
R⁴ représente un reste alkyle en C₁-C₇ ou aryle en C₆-C₁₀ et
m est 0 ou 1.

2. Procédé de préparation des composés de formule générale 1 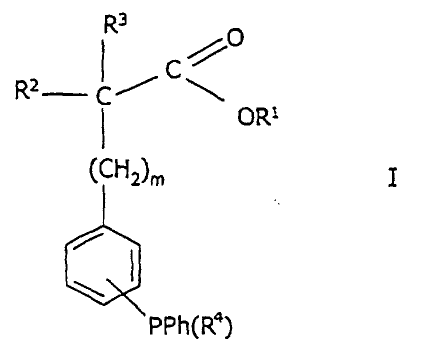 où
R¹ est l'hydrogène, un reste alkyle en C₁-C₇, un reste aryle en C₆-C₁₀ ou un métal monovalent, de préférence le sodium ou le potassium,
R² représente l'hydrogène ou un reste alkyle en C₁-C₇,
R³ représente l'hydrogène ou un reste -NR⁵R⁶ où R⁵ et R⁶ sont identiques ou différents et sont l'hydrogène ou des restes alkyles en C₁-C₇ ou aryles ou C₆-C₁₀,
R⁴ représente un reste alkyle en C₁-C₇ ou aryle en C₆-C₁₀ et
m est 0 ou 1
par réaction de composés fluorophényl-substitués de formule générale II 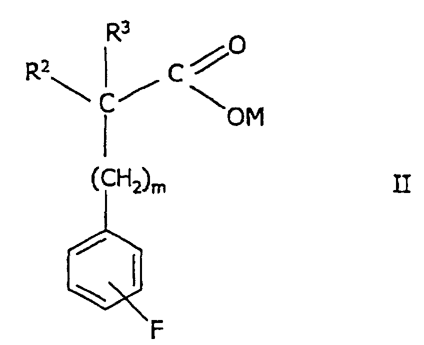 où
R² représenté l'hydrogène ou un reste alkyle en C₁-C₇,
R³ représente l'hydrogène ou le reste -NR⁵R⁶ où R⁵ et R⁶ sont identiques ou différents et sont l'hydrogène ou des restes alkyles en C₁-C₇ ou aryles,
m est 0 ou 1, et
M est le sodium ou le potassium
avec un phosphure de formule générale III
Ph(R⁴)PM III
où
R⁴ représente un reste alkyle en C₁-C₇ ou aryle en C₆-C₁₀, en particulier un reste phényle, et
M est le sodium ou le potassium
puis hydrolyse acide du mélange réactionnel.

3. Procédé selon la revendication 2, **caractérisé en ce que** l'on conduit la réaction dans un solvant aprotique polaire organique, de préférence le 1,2-diméthoxyéthane ou le tétrahydrofurane, à une température de 80 à 120°C.

4. Procédé selon la revendication 2 ou 3, **caractérisé en ce que** l'on fait réagir comme composés de formule II des sels de sodium ou de potassium de la 4-fluoro-α-phénylglycine (IIa), de la 4-fluoro-α-phényl-α-méthylglycine (IIb) ou de la β-(4-fluorophényl)-α-alanine (IIc) avec les phosphures de potassium Ph(R⁴)PK à titre de composés de formule III, où R⁴ est un reste alkyle en C₁-C₇ ou phényle.

5. Procédé de préparation d'aminoacides phosphinophényl-substitués de formule IV à base de phénylglycine selon la revendication 2 ou 3, 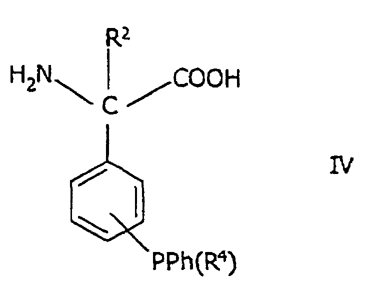 où R² représente l'hydrogène ou méthyle et R⁴ représente un reste alkyle en C₁-C₇ ou phényle et le reste phosphinophényle -PPh(R⁴) se trouve en position ortho ou para par rapport au substituant aminoacide -C(NH₂)(R²)(COOH).

6. Procédé de préparation d'aminoacides phosphinophényl-substitués de formule V à base de phénylalanine selon la revendication 2 ou 3, 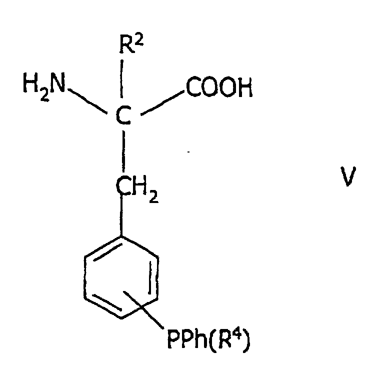 où R² représente l'hydrogène ou un reste alkyle en C₁-C₇, en particulier méthyle, et R⁴ représente un reste alkyle en C₁-C₇ ou phényle et le reste phosphinophényle -PPh(R⁴) se trouve en position ortho ou para par rapport au substituant aminoacide -CH₂-C(NH₂)(R²)(COOH).

7. Utilisation des composés selon la revendication 1 comme constituants de catalyseurs pour des réactions pour la formation de liaisons C-C, C-H, C-N, C-Si ou C=O.
